**Europäisches Patentamt**

**European Patent Office**

**Office européen des brevets**

(11) Publication number : **0 406 815 B1**

# EUROPEAN PATENT SPECIFICATION

(45) Date of publication of patent specification :
**11.10.95 Bulletin 95/41**

(51) Int. Cl.[6] : **G03B 17/30**

(21) Application number : **90112715.9**

(22) Date of filing : **03.07.90**

(54) **Photographic film cassette.**

(30) Priority : **04.07.89 JP 172594/89**
**04.07.89 JP 172595/89**

(43) Date of publication of application :
**09.01.91 Bulletin 91/02**

(45) Publication of the grant of the patent :
**11.10.95 Bulletin 95/41**

(84) Designated Contracting States :
**DE FR GB**

(56) References cited :
**EP-A- 0 091 077**
**EP-A- 0 214 928**
**EP-A- 0 334 325**
**WO-A-80/01960**
**FR-A- 797 075**
**GB-A- 1 112 349**
**US-A- 1 469 018**
**US-A- 3 482 797**
**US-A- 4 407 579**
**US-A- 4 887 776**

(73) Proprietor : **FUJI PHOTO FILM CO., LTD.**
**210 Nakanuma**
**Minami-Ashigara-shi**
**Kanagawa 250-01 (JP)**

(72) Inventor : **Takahashi, Koichi**
**C/o Fuji Photo Film Co., Ltd.,**
**No. 210 Nakanuma**
**Minami Ashigara-shi., Kanagawa (JP)**
Inventor : **Okutsu, Kazuo**
**C/o Fuji Photo Film Co., Ltd.,**
**No. 210 Nakanuma**
**Minami Ashigara-shi., Kanagawa (JP)**
Inventor : **Hirose, Masuhiko**
**C/o Fuji Photo Film Co., Ltd.,**
**No. 210 Nakanuma**
**Minami Ashigara-shi., Kanagawa (JP)**
Inventor : **Mizuno, Kazunori**
**C/o Fuji Photo Film Co., Ltd.,**
**No. 210 Nakanuma**
**Minami Ashigara-shi., Kanagawa (JP)**

(74) Representative : **Grünecker, Kinkeldey,**
**Stockmair & Schwanhäusser Anwaltssozietät**
**Maximilianstrasse 58**
**D-80538 München (DE)**

**EP 0 406 815 B1**

## Description

### BACKGROUND OF THE INVENTION

This invention relates to a photographic film cassette and more particularly to a photographic film cassette in which a film leader is fed from a film passage mouth by means of rotation of a spool.

As it is well known in this technical field, a photographic film cassette of 35mm type comprises a cylindrical cassette including a film passage mouth, a spool rotatably contained in this cassette, and a photographic film strip being 35mm in width wound on this spool. In this type of 35mm photographic film cassette, a leader of the photographic film strip (hereinafter simply referred to as the "film strip") is kept initially protruded from the film passage mouth. The reason why the film leader is kept initially protruded from the cassette as mentioned is that even if the spool should be rotated in the state where the film leader is completely wound in the cassette, the roll of film strip would merely get loosened from the spool within the cassette and the film leader would not be fed out through the film passage mouth.

Conventional cameras using such a film cassette are designed in such a manner as to automatically load a film by taking advantage of the film leader withdrawn from the cassette. That is, when the cassette film is loaded in a camera, the film leader is caught by a film withdrawing mechanism such as a sprocket and delivered into the film take-up chamber.

However, a beginner is sometimes embarrassed with the initially protruded film leader when he or she is going to load a film cassette because, for instance, he or she often finds it difficult to set the leading end of the film to a predetermined position. Another problem is that as a camera requires a film withdrawing mechanism to be disposed between a cassette loading chamber and a film take-up chamber, its structure becomes complicated.

Further to the above mentioned conventional cassettes, US-A-4,407,579 and EP-A-0 091 077 disclose so-called self-advancing film cassettes. These cassettes are constructed so that the film leader can be advanced through the film passage mouth to the exterior of the cassette shell simply by rotation of the film spool.

In the US'579 patent which reflects the preamble features of claim 1, the spool shaft consists of two pieces which telescopically receive each other, so that the film roll can be clamped between the flanges when they are pressed together by an operator in order to advance the film leader. The construction of EP'077 is rather different to the invention, because the film roll is radially constrained by axially extending flanges.

### OBJECTS OF THE INVENTION

It is therefore a principal object of the present invention to provide a film cassette in which film loading can be made with no arrangement for initially protruding a film leader from a cassette.

Another object of the invention is to provide a film cassette in which the structure of a camera can be simplified.

### SUMMARY OF THE INVENTION

To achieve the above and other objects, the present invention provides a film cassette as defined in claim 1.

According to a film cassette of the present invention, as the roll is rotated together with the spool, the film leader can be fed out through the film passage mouth. Also, as the film leader is not protruded from the cassette, handling becomes easier and even a beginner will not be embarrassed when the film cassette is loaded in a camera. Furthermore, a feed mechanism of the film leader can be omitted from the camera.

### BRIEF DESCRIPTION OF THE DRAWINGS

The above and other objects, features and advantages of the present invention will become more apparent, and the invention itself will best be understood, from a study of the following description and appended claims, with reference had to the attached drawings showing some preferred embodiments of the invention, wherein:

Fig. 1 is an exploded perspective view showing one embodiment of the present invention in which a roll of film is clamped by elastically deforming one of a pair of flanges with a ridge formed on a side plate;

Fig. 2 is a vertical sectional view of a film cassette shown in Fig. 1;

Fig. 3 is a vertical sectional view showing a modified embodiment of the present invention in which both flanges are elastically deformed;

Fig. 4 is a vertical sectional view showing another modified embodiment of the present invention in which these flanges are elastically deformed by having both flanges engaged in grooves formed in a cassette body;

Fig. 5 is a vertical sectional view of another embodiment of the present invention which includes ridges adapted. to position a roll of film;

Fig. 6 is a vertical sectional view of still another embodiment which includes a spool having a pair of deformed flanges;

Fig. 7 is a sectional side view showing yet another embodiment of the present invention in which an arcuate guide passage is formed in the cassette body;

Fig. 8 is an end view showing a film passage mouth for the film cassette of Fig. 7;

Fig. 9 is a sectional side view showing another embodiment of the present invention which includes a retaining claw for retaining the film leader;

Fig. 10 is an enlarged sectional side view of the nearby area of the film passage mouth of Fig. 9, which is improved such that the film leader is stopped in a state pressed with a light shielding plate;

Figs. 11 through 13 are views similar to Fig. 10, in which embodiments of the light shielding plate are shown, respectively;

Fig. 14 is a perspective view showing another embodiment of the present invention in which the outermost peripheral surface of the roll of film is pressed with an elastic member;

Fig. 15 is a sectional side view of the film cassette of Fig. 14;

Fig. 16 is a vertical sectional view of the film cassette of Fig. 14;

Fig. 17 is a vertical sectional view showing another embodiment of the present invention in which the cassette body is provided with ring-like ridges;

Fig. 18 is a sectional side view showing another embodiment of the present invention in which the cassette body is provided with elastic plates;

Fig. 19 is a vertical sectional view of the film cassette of Fig. 18;

Fig. 20 is a sectional side view showing another embodiment of the present invention in which elastic plates are disposed within the cassette body which includes a guide passage;

Fig. 21 is a sectional side view showing another embodiment of the present invention in which elastic plates is disposed within the cassette body which includes s retaining claw;

Fig. 22 shows a box-type film cassette with a cover member, of which the film roll contained therein is clamped between a pair of flanges; and

Fig. 23 shows a modified embodiment of the box-type film cassette with a cover member, in which the outermost peripheral surface of the roll of film is pressed with elastic plates.

## DETAILED DESCRIPTION OF THE INVENTION

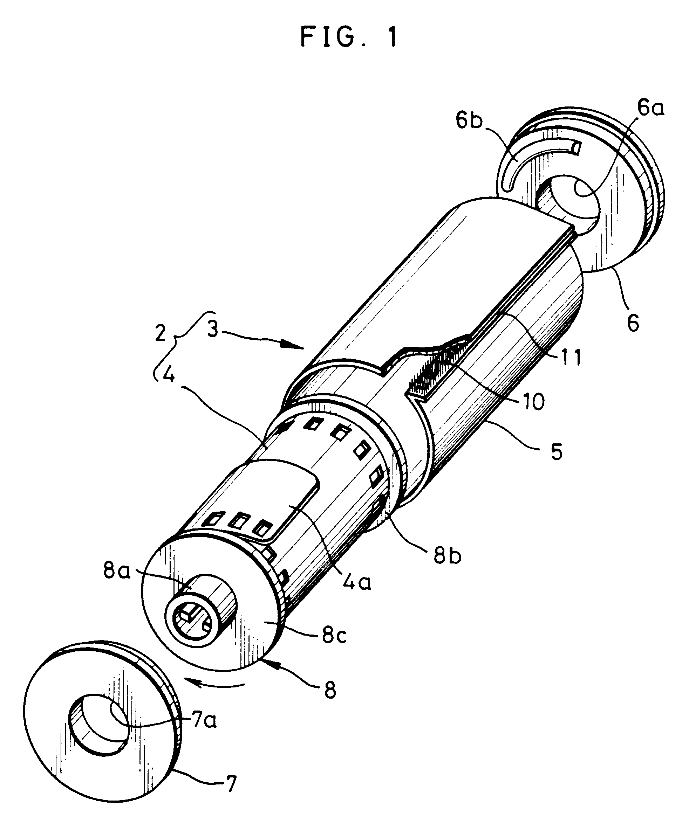

In Fig. 1 showing a first embodiment of the present invention, a film cassette 2 comprises a roll of film 4, and a cassette 3 for containing the roll of film 4 light-tight. This cassette 3 comprises a cylindrical cassette body 5, a pair of side plates 6 and 7 adapted to engage with the cassette body 5 light-tight, and a spool 8. The component parts are preferably molded from plastic material. The cassette body 5 is provided with a film passage mouth 11 with a plush 10 attached thereto for light shielding purpose. The spool 8 comprises a spool shaft 8a and a pair of flanges 8b and 8c and is integrally molded from plastic material. One flange 8b is formed thin so that it may have elasticity and the other flange 8c is thick enough not to be deformed. The distance between this pair of flanges 8b and 8c is slightly greater than the width of a film strip. The roll of film 4, as well known, comprises a film strip having its back surface disposed outside and its silver halide emulsion surface disposed inside, and wound on the spool shaft 8a and rolled. The film leader 4a, when before loaded in a camera (not shown), is also hidden in the cassette body 5. A rear end of the film strip is secured to the spool shaft 8a as in the case of the conventional film cassette of 35mm type.

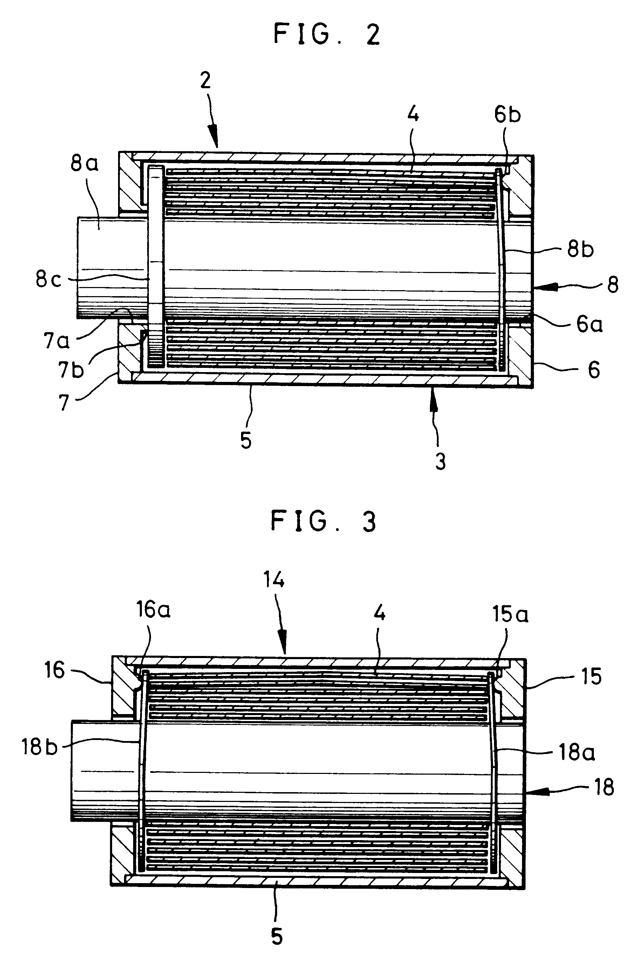

The side plate 6 is provided at its central portion with an opening 6a adapted to rotatably support one end portion of the spool shaft 8a, and its inner wall surface is provided with an arcuate ridge 6b adapted to press a part of the flange 8b. Likewise, the side plate 7 is provided at its central portion with an opening 7a adapted to rotatably support the other end of the spool shaft 8a. Also, in the nearby place, there is provided a ring-like ridge 7b (see Fig. 2) in order to reduce friction between the inner wall surface of the side plate 7 and the flange 8c. One side plate may be integrally molded together with the cassette body 5. It may also be designed such that the cassette body 5 is divided into two parts and this half cassette is integral with a half-circular side plate.

In Fig. 2, as the distance between the ridge 6b and another projection 7b is shorter than that between the flanges 8b and 8c, the flange 8b is elastically deformed urged by the ridge 6b. By this, an end face of the roll of film 4 is more firmly clamped between the flanges 8a and 8b at its outer side near the cassette body 5 than its inner side near the spool shaft 8a.

The film cassette 2 of the present embodiment is to be loaded in the camera in a condition in which even the film leader 4a is wound inside the cassette 3. When the spool 8 is rotated by a mechanism of the camera in the direction as indicated by an arrow of Fig. 1, the roll of film 4 is rotated together with the spool 8 owing to friction between the flanges 8b and 8c and the side end faces of the outer sides of the roll of film 4 so as to feed the film leader 4a outside the cassette body 5 from the film passage mouth 11. The film leader 4a is fed toward and caught by a take-up spool of the camera as well known.

Since the roll of film 4 is clamped between the pair of flanges 8b and 8c, it can also be prevented from getting loosened, and as a result there can be prevented such inconveniences that the vertically overlapped portions of the film strip are rubbed with each other to generate scratches due to vibrations during transportation or it is rubbed with the inner wall of the cassette body 5.

Also, the distance between the ridge 6b and another projection 7b can be made longer than that between the flanges 8b and 8c. In that case, a push member is provided in the camera and the spool 8 is pushed rightwards in Fig. 2 to press the flange 8b against the ridge 6b so as to be elastically deformed. Owing to the elastic deformation of this flange 8b, both side edges of the outer sides of the roll of film 4 can be clamped with the pair of flanges 8a and 8b as previously mentioned.

Fig. 3 illustrates a second embodiment of the present invention, and like component parts shown in Figs. 1 and 2 are represented by the same reference numerals. In a film cassette 14 of this embodiment, side plates 15 and 16 are provided with the same ridges 15a and 16a as in the first embodiment, and both flanges 18a and 18b are formed thin so that they may have elasticity. With the film cassette 14 of the construction as mentioned, the flanges 18a and 18b are urgedly elastically deformed by the ridge portions 15a and 16a so as to clamp both side edges of the outer sides of the film roll 4. Accordingly, the same effect as the first embodiment can be obtained.

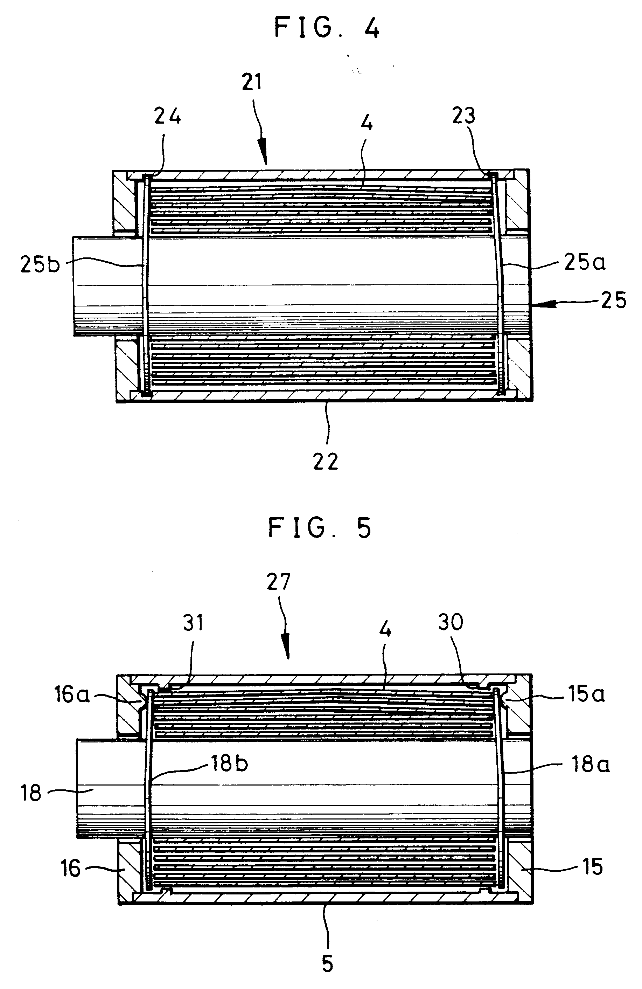

Fig. 4 illustrates a third embodiment of the present invention. In a film cassette 21 of this embodiment, a cassette body 22 is provided with grooves 23 and 24 formed at its inner sides, and a pair of flanges 25a and 25b of a spool 25 are loosely engaged therein. As the distance between the grooves 23 and 24 is slightly smaller than the width of the film strip here, the peripheral edge portions of the flanges 25a and 25b are elastically deformed in the direction approaching each other. Accordingly, both side edges of the outer periphery of the roll of film 4 are clamped between the pair of flanges 25a and 25b.

Fig. 5 illustrates an improved embodiment of the film cassette of Fig. 3, and like component parts of Fig. 3 are represented by the same reference numerals. In this film cassette 27, ring-like projections 30 and 31 are formed on the inner sides of the cassette body 5. These projections 30 and 31 project into a space between the pair of flanges 18a and 18b. Owing to the foregoing arrangement, the film strip is prevented from entering a space between the flange 18a or 18b and the inner wall of the cassette body 5 in climbing over the flange 18a or 18b. Of course, as these projections 30 and 31 press the outermost peripheral surface of the roll of film 4, the film can be more surely fed out when compared with the case where the roll of film 4 is clamped between only flanges 18a and 18b.

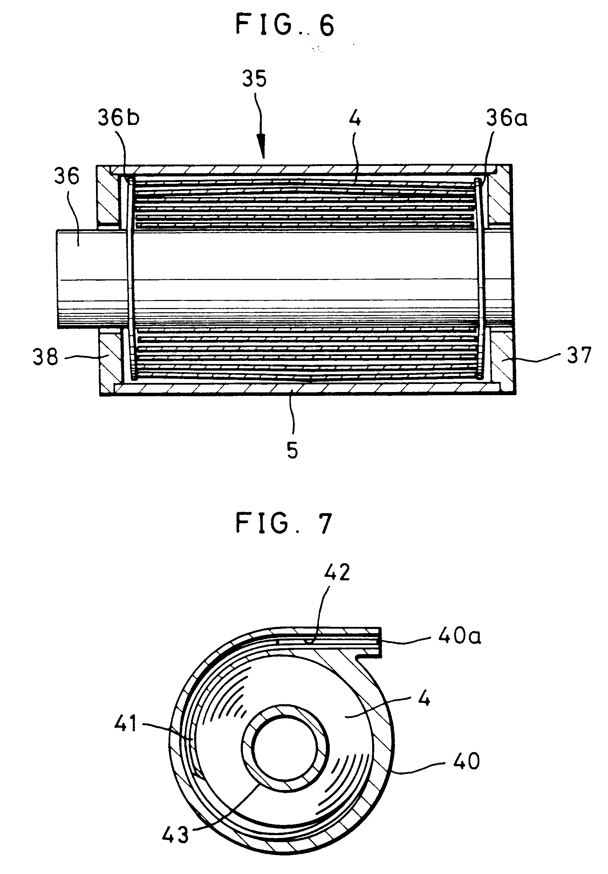

Fig. 6 illustrates a fifth embodiment of the present invention. A spool 36 of a film cassette 35 has a pair of flanges 36a and 36b of elasticity, and these flanges 36a and 36b are designed such that both the outer peripheral edges thereof are curved inwardly so that the distance between the outer peripheral edges is shorter than the width of the film strip. Owing to the foregoing arrangement, as both the side edges of the outermost periphery of the roll of film 4 are clamped from both sides by the flanges 36a and 36b, the same effect as the first embodiment can be obtained. Although both the flanges 36a and 36b are inclined in this embodiment, only one of them may be inclined. The reference numerals 37 and 38 denote a pair of side plates.

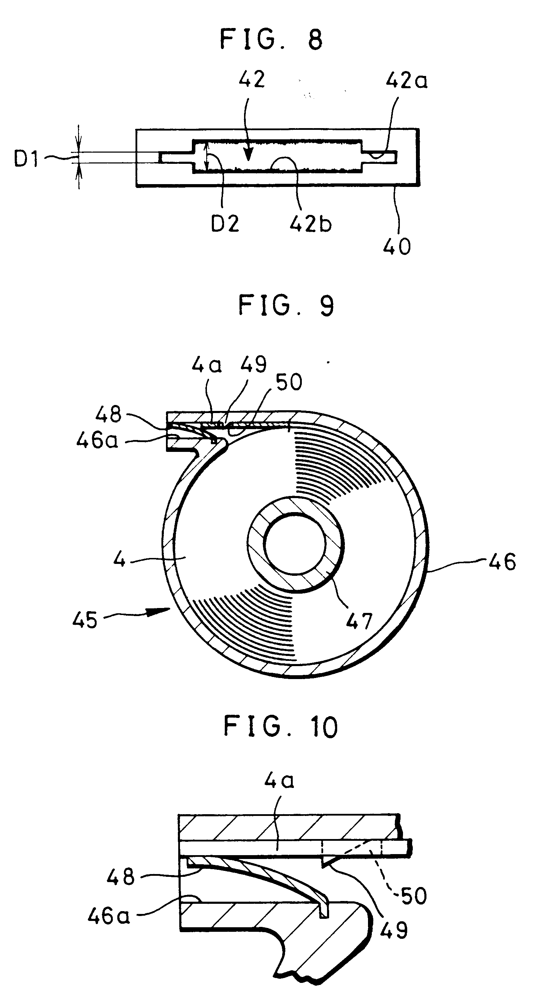

Figs. 7 and 8 illustrate another embodiment in which a guide passage is formed within the cassette body. Within the cassette body 40, an arcuate guide element 41 is integrally formed. By this guide element 41, an arcuate guide passage 42 communicating with a film passage mouth 40a is defined. This cassette body 40 contains light-tight therein a spool 43 having the same construction as that of the spool 36 shown in Fig. 6. The roll of film 4 is wound on the spool 43 and a pair of side plates are engaged with the cassette body 40. The guide element 41 is formed on the cassette body 40 such that it enters a space between a pair of flanges. It may be designed such that, as shown in Fig. 3, the side plates are provided with ridges so as to elastically deform the flanges.

The guide passage 42, as shown in the illustration of Fig. 8 in which the guide passage 42 is seen from the film passage mouth 40a, comprises a wide passage 42b and narrow passages 42a disposed at both sides thereof. When guiding, the narrow passages 42a contact both side edges of the film strip. As the wide passage 42b does not contact the film strip, the back surface and silver halide emulsion surface thereof do not suffer from scratches. Also, the outer surface of the wide passage 42b is a mat surface on which minute unevenness is formed in order to improve light shielding ability. As light, which has entered from the film passage mouth 40a, proceeds while being refracted, it is attenuated and will never expose the roll of film 4.

In this embodiment, as the outer side of the roll of film 4 is clamped at both side edges thereof between the pair of flanges, when the roll of film 4 is rotated together with the spool 43, the film leader is fed out from the film passage mouth 40a via the guide passage 42. If the leading end portion of the guide element 41 is formed thin in order to provide elasticity and the outermost peripheral surface of the roll of film 4 is pushed with this leading end portion, the film leader can more surely be fed out. Also, if the film leader is stopped within the guide passage 42, it will be good help for improving the reliability on the film feeding action in accordance with rotation of the spool. Also, in order to further improve the light shielding ability of the guide passage 42, it is preferable that the base of the film strip is dyed with a dye having an opacifying ability, or that knurling is applied to 1 or 2 frame portions of the film strip from the film leader. Also, to improve the light shielding ability, it is preferable that the width D1 of the narrow passage is 0.2mm or more, the width D2 of the wide passage 42b is 0.8mm or less, and the length of the guide passage 42 is 5mm or more.

Fig. 9 depicts a film cassette 45 adapted to retain the film leader in the vicinity of the film passage mouth. The cassette body 46 rotatably contains therein the same spool 47 as the embodiment of Fig. 6. In the vicinity of the film passage mouth 46a, a light shielding plate 48 having elasticity and an engaging claw 49 adapted to be engaged with a hole 50 formed on the side of a leading end of the film leader 4a in order to prevent the film leader 4a from not being taken into the cassette body 46. This light shielding plate 48 is formed of, for example, a thin metal plate having elasticity, a plastic film properly dyed to have a light shielding ability, a plastic film with metallic foils attached thereto, a plastic film with a metal deposition, a laminated material formed of a combination of these materials, etc.

By virtue of a provision of this light shielding plate 48, as there can be realized a film passage mouth structure having a favorable light shielding ability while maintaining the severely limited feeding resistance, reliability on the film feeding work which is performed in accordance with rotation of the spool can be improved. It is also possible to design that the film leader 4a is held in the film passage mouth 46a by pressing the film leader 4a with a light shielding element and without the retaining claw 49. Also, as is shown in Fig. 10, if the film leader 4a is retained in a state where an end portion of the film leader 4a is held between the light shielding plate 48 and the inner wall of the film passage mouth 46a, reliability on the film feeding work can be further improved.

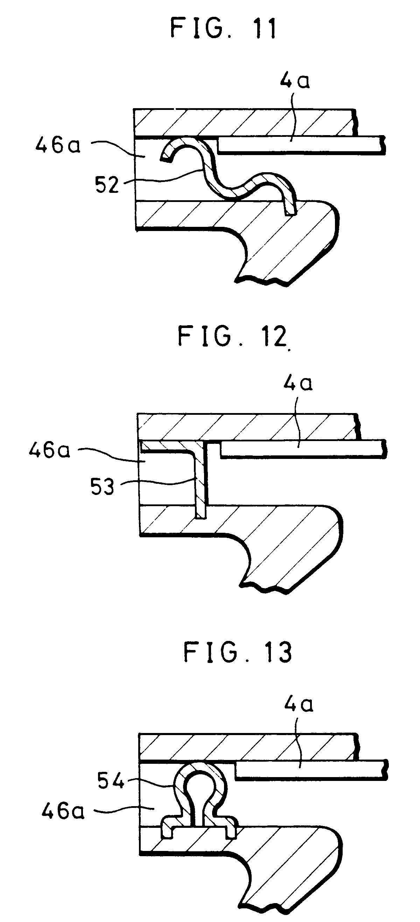

Figs. 11 through 13 depict modified embodiments of the light shielding plates, respectively. In the embodiment shown in Fig. 11, a light shielding plate 52 is formed in an S-shape. Similarly, the configuration of a light shielding plate 53 of Fig. 12 is an L-shape, and that of a light shielding plate 54 of Fig. 13 is an $\Omega$-shape in a Greek letter.

The elastic flange may be formed thinner as it goes toward its tip besides its feature as having a uniform thickness. Furthermore, the configuration of the flange is not limited only to a disk shape. It may be formed into a triangular shape having the thickest portion at its center, or otherwise it may be provided with a cut or a notch to provide an enlarged elasticity.

To facilitate an easy feeding of the film strip, it is preferable to enlarge the friction between the inner side of the flange and the side end face of the roll of film. This can be achieved by providing a rough inner surface of the flange, or applying a pear-skin pattern, or forming irregularities on the inner surface, or forming a friction layer on the inner surface in order to increase the friction resistance. It is preferable that the friction resistance between the ridge 6b and the outer surface of the flange 8b is small. To this end, a lubricant layer is provided to both or a selected one of the flange 8b and the ridge 6b. Also, it is preferable that both a part of the outer surface of the flange and the ridge, or selected one of them is a resin or metallic material having a slippery property.

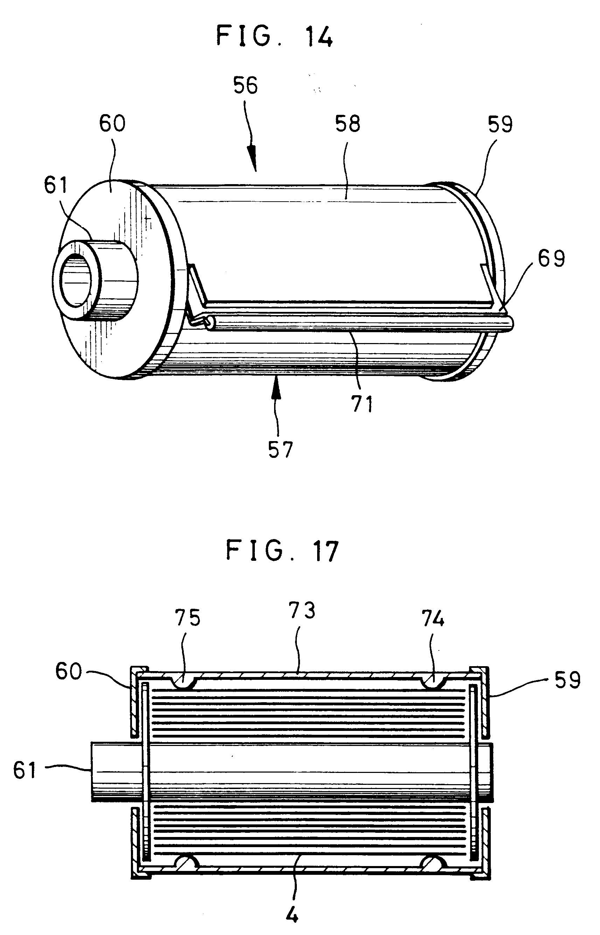

Figs. 14 through 16 illustrate another embodiment in which the outermost peripheral surface of the roll of film is pressed toward the center line of the roll of film. The film cassette 56 comprises a cassette 57 and a roll of film 4. The cassette 57 comprises a cylindrical cassette body 58, a pair of side plates 59 and 60 adapted to engage light-tight with both side edges thereof from outside, and a spool 61 with the roll of film 4 wound on it. The cassette body 58 is provided with elastic members 62 through 64 formed of, for instance, rubber and sponge, mounted on the inner wall thereof in such a manner as to enter a space between a pair of flanges 61a and 61b of the spool 61 and adapted to urge the outermost peripheral surface of the roll of film 4 toward the center of the shaft of the spool 61 from three directions. These elastic members 62 through 64 are provided on surfaces, which contact the roll of film 4, with lubricant layers 65 through 67 using, for instance, lubricant or a tape having a lubricant surface. Also, the cassette body 58 is provided with a film passage mouth 70 with a light shielding plush 69 attached thereto. The roll of film 4 has a film trailer secured to the spool 61 and a rod-like stopper 71 mounted on the film leader 4a. By virtue of a provision of this stopper 71, the film leader 4a is prevented from being taken into the cassette body 58.

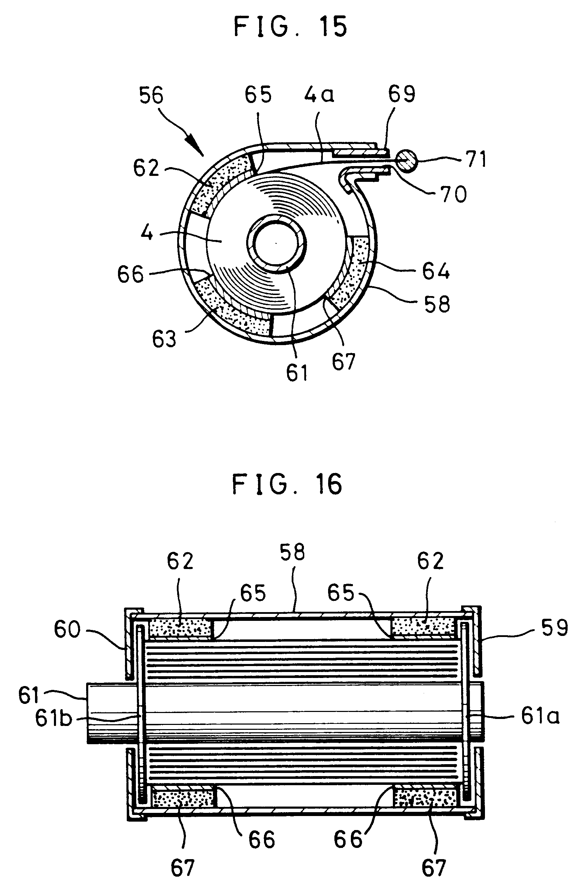

Material for the lubricant layers 65 through 67 are selected so that, when the coefficient of friction between the back surface of the film strip and the lubricant layers 65 through 67 which contact the back surface is represented by $\mu 1$, and the coefficient of friction between the back surface of the film strip 4 and the silver halide

emulsion surface by $\mu2$, a condition $\mu1 \leqq \mu2$ is satisfied. By satisfying this conditional expression, rotational force of the spool 61 is surely transmitted to the film leader 4a. Therefore, by rotating the spool 61 in the feeding direction (clockwise in Fig. 15), the film leader 4a can be fed outside the cassette body 58 from the film passage mouth 70.

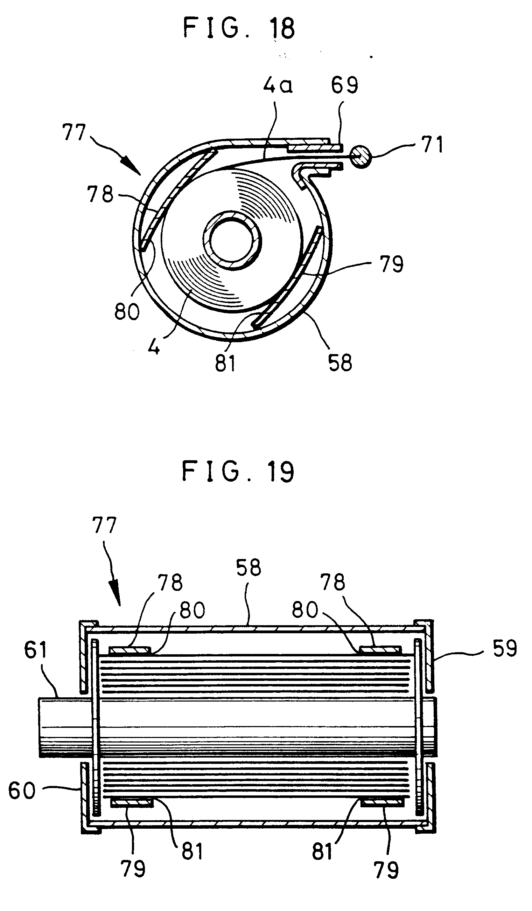

Fig. 17 depicts another embodiment in which the inner wall of a cassette body 73 is provided with a pair of ring-like projections 74 and 75, and like component parts of the embodiment of Figs. 14 through 16 are represented by the same reference numerals. The coefficient of friction $\mu1$ between the projections 74 and 75 and the film base is smaller than the coefficient of friction $\mu2$ between the upper and lower surfaces of the film strip 4. In this embodiment, since the outermost peripheral surface of the roll of film 4 is pressed with the projections 74 and 75, the film leader is fed out owing to the rotation of the spool 61.

A film cassette 77 depicted in Figs. 18 and 19 comprises the cassette body 58, and a pair of elastic plates 78 and 79 disposed within the cassette body 58 and adapted to press the outermost peripheral surface of the roll of film 4. These elastic plates 78 and 79 are provided on their outer surfaces with lubricant layers 80 and 81. Generally identical component parts of Figs. 14 through 16 are represented by identical reference numerals.

To confirm the effect of the embodiment for pressing the outermost peripheral surface of the roll of film 4, sample Nos. 1 through 5 were prepared and the spool was rotated under the conditions 1 through 3 in the feeding direction. And the feeding work of the film leader 4a was checked.

CONDITION 1: IMMEDIATELY AFTER MANUFACTURED;

CONDITION 2: AT THE TIME WHEN THREE DAYS HAVE PASSED IN A STATE WHERE THE SAMPLES WERE DRIED AT 60°C AFTER MANUFACTURED; and

CONDITION 3: AT THE TIME WHEN THREE DAYS HAVE PASSED IN A STATE WHERE THE SAMPLES WERE SUBJECTED TO 40°C AND 80% HUMIDITY AFTER MANUFACTURED.

The sample No. 1 is a film cassette having the construction as shown in Figs. 14 through 16. As elastic members 62 through 64, a polyurethane of 3mm in thickness and 50% in compression ratio (when pressed with 50 g/cm$^2$) was used. By attaching a Mending Tape 810 (merchandise name) available from Sumitomo 3M Ltd., Japan to the outer surfaces of the elastic members 62 through 64, the lubricant layers 65 through 67 were formed. As a film strip, a color negative film Super HR-100 (merchandise name) which is manufactured by FUJI PHOTO FILM CO., LTD. was used.

The sample No. 2 has the same construction as the sample No. 1. As a film strip, an X-ray Film #80 (merchandise name of an X-ray film using a polyester base of 80 $\mu$m in thickness) manufactured by FUJI PHOTO FILM CO., LTD. was used.

The sample No. 3 is a film cassette having the construction as shown in Figs. 18 and 19. The elastic plates 78 and 79 were formed of silicon manganese steel of 0.1mm in thickness and the Mending Tape 810 was used as the lubricant layers 80 and 81. As a film strip, the Super HR-100 was used.

The sample No. 4 has the same construction as the sample No. 3 but the X-ray film #80 was used as a film strip.

The sample No. 5 has almost the same construction as the sample No. 1. However, in order to prevent the film leader from being fed out owing to rotation of the spool during transportation, etc., the edges of openings of bearings of the side plates 59 and 60 and the spool 61 are temporarily attached together with an adhesive agent.

A comparison sample No. 6 is for comparison with the present invention and has the same construction as the sample No. 1 only excluding the elastic members 62 through 64. A comparison example No. 7 has the same construction as the sample No. 3 only excluding the lubricant layer.

-- TABLE 1 --

| | Feed out | Feeding torque (g·cm) | Coefficient of friction $\mu 2$ | | | Coefficient of friction $\mu 1$ | | |
|---|---|---|---|---|---|---|---|---|
| | | | condition 1 | 2 | 3 | condition 1 | 2 | 3 |
| Sample No.1 | O | 80 | 0.48 | 0.50 | 0.70 | 0.42 | 0.42 | 0.60 |
| Sample No.2 | O | 70 | 0.71 | 0.72 | 0.95 | 0.54 | 0.53 | 0.69 |
| Sample No.3 | O | 150 | 0.48 | 0.50 | 0.70 | 0.42 | 0.44 | 0.58 |
| Sample No.4 | O | 120 | 0.71 | 0.72 | 0.95 | 0.54 | 0.53 | 0.70 |
| Sample No.5 | O | 320 | | | | | | |
| Comparison sample No.1 | X | | | | | | | |
| Comparison sample No.2 | X | | 0.52 | 0.55 | 0.70 | 0.72 | 0.73 | 0.95 |

The coefficients of friction $\mu 1$ and $\mu 2$ were measured with a HEIDON-1D (merchandise name) available from Shinto Scientific Co., Ltd. The symbolic mark O indicates that the film leader can be fed out, while X indicates that the film leader cannot be fed out.

As apparent from Table 1, the sample Nos. 1 through 5 could feed out the film leader from the film passage mouth by means of rotation of the spool. Any one of them satisfies the expression $\mu 1 \leqq \mu 2$. In this way, as the film leader can be fed out by means of rotation of the spool, the film withdrawing mechanism of a camera can be omitted. Furthermore, as the film leader can be contained within the cassette body, it becomes easy to handle the film cassette and to load it into a camera.

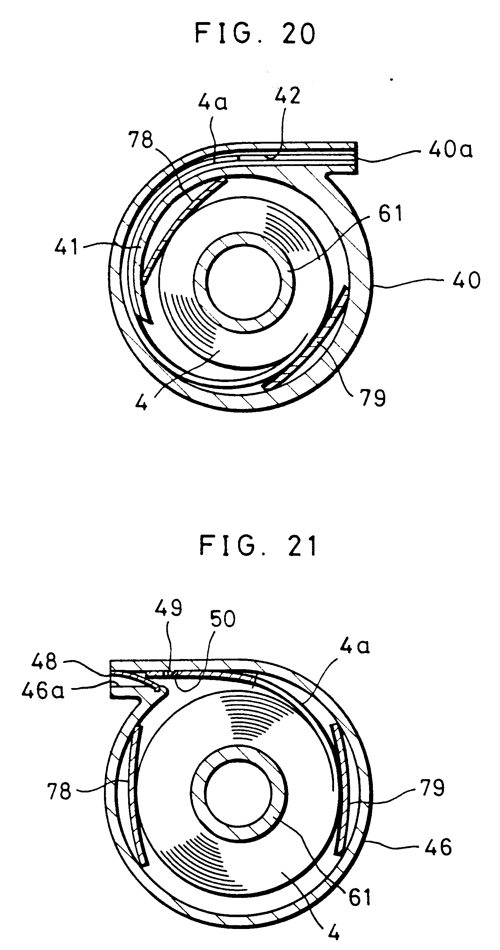

Another embodiment shown in Fig. 20 employs the cassette body 40 including the guide passage 42 as shown in Figs. 7 and 8, and elastic plates 78 and 79 additionally provided therein in order to press the outermost peripheral surface of the roll of film 4.

Another embodiment shown in Fig. 21 employs the cassette body 46 as shown in Fig. 9, and elastic plates 78 and 79 are additionally provided therein in order to press the outermost peripheral surface of the roll of film 4. It is preferable that the film leader 4a is retained by the retaining claw 49 with the leading end of the film leader 4a protruded from the light shielding plate 48 as shown in Fig. 10. Furthermore, in the embodiment shown in Figs. 20 and 21, an elastic member such as rubber, sponge as shown in Fig. 15 may be used as a film pressing member instead of the elastic plate.

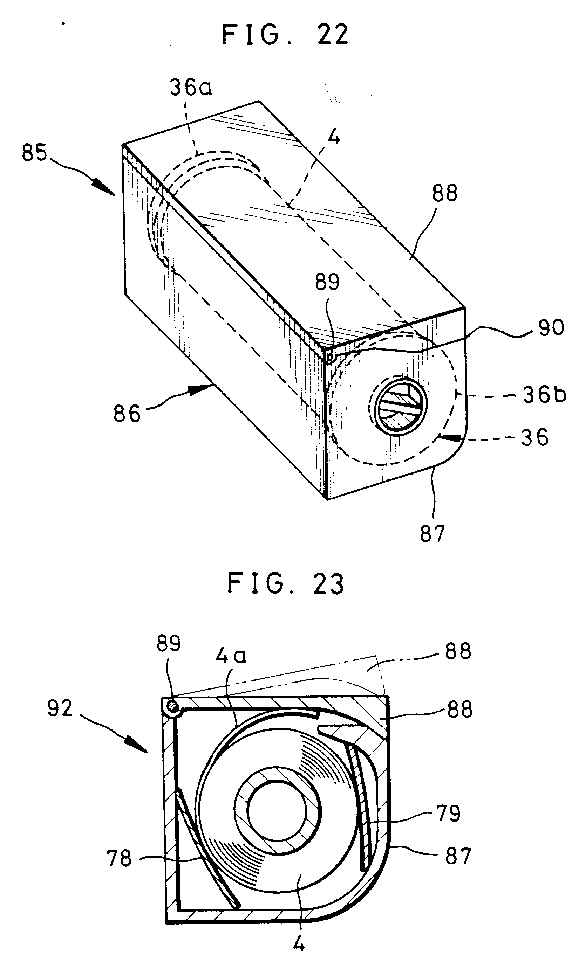

Fig. 22 illustrates another embodiment of a box-type film cassette 85. A cassette 86 comprises a cassette body 87 and an opening/closing cover member 88 and is formed of plastics having a light shielding ability. A spool 36 including deformed flanges 36a and 36b as shown in Fig. 6 is employed, and this spool 36 with the roll of film 4 wound thereon is contained light-light within a cassette body 87. When the opening/closing cover member 88 is pivoted about a hinge 89, a film passage mouth 90 is formed between the cassette body 87 and the cover member 88. It is preferable that the film passage mouth 90 is provided with a retaining claw in order to retain the film leader in such a manner as to be sandwiched between the cassette body 87 and the cover member 88.

A camera employing this film cassette 85 is required to include a mechanism for opening and closing the opening/closing cover member 88. Also, in this embodiment, as the roll of film 4 is clamped between the flanges 36a and 36b, the film leader can be fed out from the film passage mouth 90 by means of rotation of the spool 36. At that time, since no obstacle is present in the film passage mouth 90, the film can be fed smoothly and the film strip will not suffer from scratches. Furthermore, as the cassette 86 completely blocks the film passage mouth 90, the light shielding plush can be excluded.

A film cassette 92 of Fig. 23 uses the elastic plates 78 and 79 shown in Fig. 18 as means for pressing the outermost peripheral surface of the roll of film 4 instead of using the flanges of a spool for clamping the side edges of the outermost periphery of the roll of film 4. Of course, the elastic plate may be employed in addition to the flanges of the spool so that the roll of film 4 can be clamped between the flanges of the spool and pressed by the elastic plate.

Since various changes and modifications of the invention will occur to and can be made readily by those skilled in the art without departing from the concept of the present invention, the present invention is not to be taken as limited to the specific embodiments except by the scope of the appended claims.

## Claims

1. A photographic film cassette (2, 14, 21, 27, 35) comprising a spool (8, 18, 25, 36) with a spool shaft (8a) having a pair of flanges (8b, 8c, 18a, 18b, 25a, 25b, 36a, 36b) which are mounted thereon and which extend radially therefrom, a photographic film roll (4) wound on said spool shaft (8a) between said pair of flanges (8b, 8c, 18a, 18b, 25a, 25b, 36a, 36b), a cassette case (3) for rotatably supporting said spool (8, 18, 25, 36), said cassette case (3) being provided with a film passage mouth (11) for passing said photographic film (4) therethrough, when said spool (8, 18, 25, 36) is rotated in the unwinding direction, **characterized in that**,
said spool shaft (8a) is a one-piece spool shaft provided with said pair of flanges (8b, 8c, 18a, 18b, 25a, 25b, 36a, 36b), and that at least one of said flanges (8b, 8c, 18a, 18b, 25a, 25b, 36a, 36b) is elastic and inclined towards the opposite flange (8b, 8c, 18a, 18b, 25a, 25b, 36a, 36b) so that a distance between peripheral edge portions of said pair of flanges (8b, 8c, 18a, 18b, 25a, 25b, 36a, 36b) is smaller than a width of said photographic film roll (4) on said spool shaft (8a), to firmly clamp said photographic film roll (4) in an axial direction between opposite surfaces of said pair of flanges (8b, 8c, 18a, 18b, 25a, 25b, 36a, 36b).

2. A photographic film cassette (2, 14, 21, 27, 35) as claimed in claim 1, **characterized in that** both of said flanges (8b, 8c, 18a, 18b, 25a, 25b, 36a, 36b) are inclined towards each other.

3. A photographic film cassette (2, 14, 27) as claimed in at least one of the claims 1 and 2, **characterized by** a projection (6b, 15a, 16a) formed on at least one side surface within said cassette case (3), said projection (6b, 15a, 16a) being arranged to elastically deform one of said flanges (8b, 8c, 18a, 18b) toward the other.

4. A photographic film cassette (21) as claimed in at least one of the claims 1 and 2, **characterized by** at least one groove (23, 24) formed within said cassette case (3), said groove (23, 24) being arranged to elastically deform one of said flanges (25a, 25b), which is rotated in and engaged with said groove (23, 24), toward the other flange (25a, 25b).

5. A photographic film cassette (2, 14, 21, 27, 35) as claimed in at least one of claims 1 to 4, which further includes at least one projection (30, 31) which is located between said pair of flanges (8b, 8c, 18a, 18b, 25a, 25b, 36a, 36b), projecting toward said spool shaft (8a), and has an inner diameter smaller than an outer diameter of an external peripheral end of said flanges (8b, 8c, 18a, 18b, 25a, 25b, 36a, 36b).

6. A photographic film cassette (2, 14, 21, 27, 35) as claimed in at least one of claims 1 to 5, **characterized in that** an arcuate guide element (41) is integrally formed within the cassette body (40), said guide element (41) entering the space between said pair of flanges (8b, 8c, 18a, 18b, 25a, 25b, 36a, 36b).

7. A photographic film cassette (45) as claimed in at least one of claims 1 to 6, **characterizsed by** means (49) for retaining a leader portion (4a) of the film in the vicinity of said film passage mouth (46a).

8. A photographic film cassette (45) as claimed in at least one of claims 1 to 7, **characterized by** a light shielding plate (48, 53, 54) having an elasticity and adapted to prevent light from entering the interior of said cassette (45), said light shielding plate (48, 53, 54) being disposed in the vicinity of said film passage mouth (46a).

9. A photographic film cassette (56, 77) as claimed in at least one of claims 1 to 8, **characterized in that** restricting means are mounted on an inner wall surface of said cassette and adapted to press the outermost peripheral surface of said photographic film (4) toward said spool shaft (8a) in order to prevent said roll of photographic film (4) from being loosened, the coefficient of friction (μ1) between said restricting means and said back surface being smaller than the coefficient of friction (μ2) between said back surface and a silver halide emulsion surface of said photographic film (4).

10. A photographic film cassette (56) as claimed in claim 9, **characterized in that** said restricting means is a circumferential projection (74, 75) disposed within said cassette (56).

11. A photographic film cassette (56, 77) as claimed in claim 9, **characterized in that** said restricting means is an elastic member (62, 63, 64) mounted within said cassette.

12. A photographic film cassette (56, 77) as claimed in claim 11, **characterized in that** said elastic member (62, 63, 64) is a rubber, a sponge, or an elastic plate (78, 79).

13. A photographic film cassette (56, 77) as claimed in claim 12, **characterized in that** said elastic member (62, 63, 64) has a lubricant layer (65, 66, 67) formed on its outer surface.


**Patentansprüche**

1. Kassette für photographischen Film (2, 14, 21, 27, 35) mit einer Spule (8, 18, 25, 36) mit einem Spulenschaft (8a), der ein Paar Flansche (8b, 8c, 18a, 18b, 25a, 25b, 36a, 36b) aufweist, die an diesem befestigt sind und sich von diesem aus radial erstrecken, einem photographischen Filmwickel (4), der zwischen dem Paar Flansche (8b, 8c, 18a, 18b, 25a, 25b, 36a, 36b) auf den Spulenschaft (8a) gewickelt ist, einem Kassettengehäuse (3) zur drehbaren Lagerung der Spule (8, 18, 25, 36), wobei das Kassettengehäuse (3) eine Filmdurchgangsöffnung (11) aufweist, zum Durchführen des photographischen Films (4) durch diese hindurch, wenn die Spule (8, 18, 25, 36) in der Abwickelrichtung gedreht wird,
**dadurch gekennzeichnet, daß**
der Spulenschaft (8a) ein einteiliger Spulenschaft ist, der das Paar Flansche (8b, 8c, 18a, 18b, 25a, 25b, 36a, 36b) aufweist, und daß zumindest einer der Flansche (8b, 8c, 18a, 18b, 25a, 25b, 36a, 36b) elastisch und zu dem gegenüberliegenden Flansche (8b, 8c, 18a, 18b, 25a, 25b, 36a, 36b) geneigt ist, so daß ein Abstand zwischen Umfangsrandabschnitten des Flanschepaares (8b, 8c, 18a, 18b, 25a, 25b, 36a, 36b) kleiner ist als eine Breite des photographischen Filmwickels (4) auf dem Spulenschaft (8a), um den photographischen Filmwickel (4) in axialer Richtung zwischen gegenüberliegenden Oberflächen des Flanschenpaares (8b, 8c, 18a, 18b, 25a, 25b, 36a, 36b) festzuklemmen.

2. Kassette für photographischen Film (2, 14, 21, 27, 35) nach Anspruch 1 **dadurch gekennzeichnet, daß** beide Flansche (8b, 8c, 18a, 18b, 25a, 25b, 36a, 36b) zueinander hin geneigt sind.

3. Kassette für photographischen Film (2, 14, 27) nach zumindest einem der Ansprüche 1 und 2 **gekennzeichnet durch** einen Vorsprung (6b, 15a, 16a), der an zumindest einer Seitenoberfläche innerhalb des Kassettengehäuses (3) ausgebildet ist, wobei der Vorsprung (6b, 15a, 16a) vorgesehen ist, einen der Flansche (8b, 8c, 18a, 18b) zu dem anderen hin elastisch zu verformen.

4. Kassette für photographischen Film (21) nach zumindest einem der Ansprüche 1 und 2 **gekennzeichnet durch** zumindest eine Nut (23, 24), die in dem Kassettengehäuse (3) ausgebildet ist, wobei die Nut (23, 24) vorgesehen ist, einen der Flange (25a, 25b), der in der Nut (23, 24) gedreht wird und mit dieser in Eingriff ist, zu dem anderen Flansche (25a, 25b) hin elastisch zu verformen.

5. Kassette für photographischen Film (2, 14, 21, 27, 35) nach zumindest einem der Ansprüche 1 bis 4, die außerdem zumindest einen Vorsprung (30, 31) aufweist, der zwischen dem Paar Flansche (8b, 8c, 18a, 18b, 25a, 25b, 36a, 36b) angeordnet ist, zu dem Spulenschaft (8a) hin vorspringt und einen inneren Durchmesser aufweist, der kleiner ist als ein äußerer Durchmesser eines äußeren Umfangsendes der Flansche (8b, 8c, 18a, 18b, 25a, 25b, 36a, 36b).

6. Kassette für photographischen Film (2, 14, 21, 27, 35) nach zumindest einem der Ansprüche 1 bis 5, **dadurch gekennzeichnet, daß** ein bogenförmiges Führungselement (41) integral mit dem Kassettenkörper (40) ausgebildet ist, wobei das Führungselement (41) in den Raum zwischen dem Paar Flansche (8b, 8c, 18a, 18b, 25a, 25b, 36a, 36b) eintritt.

EP 0 406 815 B1

7. Kassette für photographischen Film (45) nach zumindest einem der Ansprüche 1 bis 6, **gekennzeichnet durch** eine Einrichtung (49) zum Zurückhalten eines Führungsabschnitts (4a) des Films in der Nähe der Filmdurchgangsöffnung (46a).

8. Kassette für photographischen Film (45) nach zumindest einem der Ansprüche 1 bis 7, **gekennzeichnet durch** eine Lichtabschirmplatte (48, 53, 54), die Elastizität besitzt und vorgesehen ist, den Eintritt von Licht in das Innere der Kassette (45) zu verhindern, wobei die Lichtabschirmplatte (48, 53, 54) in der Nähe der Filmdurchgangsöffnung (46a) angeordnet ist.

9. Kassette für photographischen Film (56, 77) nach zumindest einem der Ansprüche 1 bis 8 **dadurch gekennzeichnet, daß** eine Begrenzungseinrichtung an einer inneren Wandoberfläche der Kassette angebracht ist und vorgesehen ist, die äußerste Umfangsoberfläche des photographischen Films (4) zu dem Spulenschaft (8a) hin zu drücken, um ein Lockern des photographischen Filmwickels (4) zu verhindern, wobei der Reibungskoeffizient ($\mu$1) zwischen der Begrenzungseinrichtung und der Rückoberfläche kleiner ist als der Reibungskoeffizient ($\mu$2) zwischen der Rückoberfläche und einer Silberhalogenidemulsionsoberfläche des photographischen Films (4).

10. Kassette für photographischen Film (56) nach Anspruch 9 **dadurch gekennzeichnet, daß** die Begrenzungseinrichtung ein Umfangsvorsprung (74, 75) ist, der in der Kassette (56) angeordnet ist.

11. Kassette für photographischen Film (56, 77) nach Anspruch 9, **dadurch gekennzeichnet, daß** die Begrenzungseinrichtung ein elastisches Teil (62, 63, 64) ist, das in der Kassette angebracht ist.

12. Kassette für photographischen Film (56, 77) nach Anspruch 11, **dadurch gekennzeichnet, daß** das elastische Teil (62, 63, 64) ein Gummi, ein Schwamm oder eine elastische Platte (78, 79) ist.

13. Kassette für photographischen Film (56, 77) nach Anspruch 12, **dadurch gekennzeichnet, daß** das elastische Teil (62, 63, 64) eine Gleitschicht (65, 66, 67) aufweist, die an seiner äußeren Oberfläche ausgebildet ist.

## Revendications

1. Cartouche (2, 14, 21, 27, 35) de pellicule photographique comportant une bobine (8, 18, 25, 36) ayant un arbre (8a) de bobine possédant deux joues (8b, 8c, 18a, 18b, 25a, 25b, 36a, 36b) qui sont montées sur l'arbre et qui dépassent radialement de celui-ci, un rouleau (4) de pellicule photographique enroulé sur l'arbre (8a) de la bobine entre les deux joues (8b, 8c, 18a, 18b, 25a, 25b, 36a, 36b), un boîtier (3) de cartouche destiné à supporter la bobine (8, 18, 25, 36) afin qu'elle puisse tourner, le boîtier (3) de cartouche ayant une embouchure (11) destinée au passage de la pellicule photographique (4) lorsque la bobine (8, 18, 25, 36) est entraînée en rotation dans le sens du déroulement,
caractérisée en ce que :
l'arbre (8a) de la bobine est un arbre en une seule pièce ayant deux joues (8b, 8c, 18a, 18b, 25a, 25b, 36a, 36b), et en ce que l'une au moins des joues (8b, 8c, 18a, 18b, 25a, 25b, 36a, 36b) est élastique et est inclinée vers la joue opposée (8b, 8c, 18a, 18b, 25a, 25b, 36a, 36b) de manière que la distance comprise entre les parties de bords périphériques des deux joues (8b, 8c, 18a, 18b, 25a, 25b, 36a, 36b) soit inférieure à la largeur du rouleau (4) de pellicule photographique formé sur l'arbre (8a) de la bobine si bien que le rouleau (4) de pellicule photographique est fermement serré en direction axiale entre les surfaces opposées des deux joues (8b, 8c, 18a, 18b, 25a, 25b, 36a, 36b).

2. Cartouche (2, 14, 21, 27, 35) de pellicule photographique selon la revendication 1, caractérisée en ce que les deux joues (8b, 8c, 18a, 18b, 25a, 25b, 36a, 36b) sont inclinées l'une vers l'autre.

3. Cartouche (2, 14, 27) de pellicule photographique selon l'une des revendications 1 et 2, caractérisée par une saillie (6b, 15a, 16a) formée sur une surface latérale au moins à l'intérieur du boîtier (3) de la cartouche, la saillie (6b, 15a, 16a) étant disposée afin qu'elle déforme élastiquement l'une des joues (8b, 8c, 18a, 18b) vers l'autre.

4. Cartouche (21) de pellicule photographique selon l'une au moins des revendications 1 et 2, caractérisée

10

par au moins une gorge (23, 24) formée à l'intérieur du boîtier (3) de la cartouche, la gorge (23, 24) étant destinée à déformer élastiquement l'une des joues (25a, 25b) qui est entraînée en rotation dans la gorge (23, 24) et mise au contact de celle-ci, vers l'autre joue (25a, 25b).

5. Cartouche (2, 14, 21, 27, 35) de pellicule photographique selon l'une au moins des revendications 1 à 4, qui comporte en outre au moins une saillie (30, 31) placée entre les deux joues (8b, 8c, 18a, 18b, 25a, 25b, 36a, 36b), dépassant vers l'arbre (8a) de la bobine et ayant un diamètre interne inférieur au diamètre externe de l'extrémité périphérique externe des joues (8b, 8c, 18a, 18b, 25a, 25b, 36a, 36b).

6. Cartouche (2, 14, 21, 27, 35) de pellicule photographique selon l'une au moins des revendications 1 à 5, caractérisée en ce qu'un élément courbe (41) de guidage est formé à l'intérieur du corps (40) de la cartouche dont il est solidaire, l'élément de guidage (41) pénétrant dans l'espace compris entre les deux joues (8b, 8c, 18a, 18b, 25a, 25b, 36a, 36b).

7. Cartouche (45) de pellicule photographique selon l'une au moins des revendications 1 à 6, caractérisée par un dispositif (49) de retenue d'une partie d'amorce (4a) de la pellicule au voisinage de l'embouchure (46a) de passage de la pellicule.

8. Cartouche (45) de pellicule photographique selon l'une au moins des revendications 1 à 7, caractérisée par une plaque (48, 53, 54) de protection contre la lumière ayant une élasticité et destinée à empêcher l'entrée de lumière à l'intérieur de la cartouche (45), cette plaque (48, 53, 54) de protection contre la lumière étant placée au voisinage de l'embouchure (46a) de passage de la pellicule.

9. Cartouche (56, 77) de pellicule photographique selon l'une au moins des revendications 1 à 8, caractérisée en ce qu'un dispositif de rétrécissement est monté sur une surface de paroi interne de la cartouche et est destiné à exercer une pression à la surface périphérique externe de la pellicule photographique (4) vers l'arbre (8a) de la bobine afin que le rouleau de pellicule photographique (4) ne puisse pas se desserrer, le coefficient de frottement ($\mu$1) du dispositif de rétrécissement et de la surface arrière étant inférieur au coefficient de frottement ($\mu$2) entre la surface arrière et une surface d'émulsion d'halogénure d'argent de la pellicule photographique (4).

10. Cartouche (56) de pellicule photographique selon la revendication 9, caractérisée en ce que le dispositif de rétrécissement est une saillie circonférentielle (74, 75) placée dans la cartouche (56).

11. Cartouche (56, 77) de pellicule photographique selon la revendication 9, caractérisée en ce que le dispositif de rétrécissement est un organe élastique (62, 63, 64) monté à l'intérieur de la cartouche.

12. Cartouche (56, 77) de pellicule photographique selon la revendication 11, caractérisée en ce que l'organe élastique (62, 63, 64) est formé de caoutchouc, d'éponge ou d'une plaque élastique (78, 79).

13. Cartouche (56, 77) de pellicule photographique selon la revendcation 12, caractérisée en ce que l'organe élastique (62, 63, 64) possède une couche lubrifiante (65, 66, 67) formée à sa surface externe.

# FIG. 1

FIG. 2

FIG. 3

# FIG. 4

# FIG. 5

# FIG. 6

# FIG. 7

## F I G. 8

## F I G. 9

## F I G. 10

FIG. 11

4a

46a

52

FIG. 12

4a

46a

53

FIG. 13

4a

54

46a

# FIG. 14

# FIG. 17

FIG. 15

FIG. 16

FIG. 18

FIG. 19

FIG. 20

FIG. 21

# FIG. 22

36a

85

4

88

89

90

86

36b

36

87

# FIG. 23

89

4a

88

92

88

79

78

87

4